# EUROPEAN PATENT APPLICATION

(11) **EP 4 227 201 A1**
(43) Date of publication of application: **16.08.2023**
(21) Application number: 22871065.3
(22) Date of filing: 15.11.2022
(51) Int. Cl.: B62M 6/55, F16D 11/00, H02K 7/10

(54) **MOTOR DEVICE AND CONTROL METHOD THEREFOR**

(30) Priority: 29.12.2021 CN 202111634711
(71) Applicant: Hypaths Limited, 999159 George Town (KY)
(72) Inventor: TIAN, Gang, Shanghai 200093 (CN)
(74) Representative: Dr. Solf & Zapf Patent- und Rechtsanwalts PartG mbB
(86) International application number: PCT/CN2022/131897
(87) International publication number: WO 2023/124591

(57) **Abstract**

A electric machine device (1) comprises an electric machine shaft (3) and an electric machine housing (2) provided on the electric machine shaft (3), a motor set module (21) is provided inside the electric machine housing (2), and a driving ring (4), a clutch ring (5) and a clutch control module are provided on one end of the electric machine shaft (3) extending from the output end of the motor set module (21), and the clutch control module is used for controlling the engagement or disengagement of the driving ring (4) and the clutch ring (5); a control method of the electric machine device is further provided. The electric machine device (1) and the control method thereof can realize the cooperation and separation of electric machine assistance by adding another clutch system to the existing electric machine clutch system, it can realize the electric assistance of the electric machine to the bicycle when the electric machine is powered on, and when the electric machine is powered off, the bicycle wheels are not subjected to the resistance inside the electric machine device (1) when the rider rides naturally by a method of controlling the complete disengagement of the driving ring (4) and the clutch ring (5) inside the electric machine device (1).

## Description

### Technical field

The present invention relates to the electromechanical field, in particular to an electric machine device and a control method thereof.

### Background

At present, for electrically assisted bicycles and other related products, the bicycles will still be subjected to the resistance of the gear and the clutch inside the electric machine when the existing brushless toothed electric machine clutch system is used while the electric machine is powered off, so that the rider cannot ride as easily as an ordinary bicycle.

In view of the problems existing in the prior art, it is of great significance to provide an electric machine device and a control method thereof.

### Summary of the invention

In order to solve the above problems, the present invention provides an electric machine device and a control method thereof.

To achieve the above purpose, the electric machine device of the present invention comprises an electric machine shaft and an electric machine housing provided on the electric machine shaft, a motor set module is provided inside the electric machine housing, and a driving ring, a clutch ring and a clutch control module are provided on one end of the electric machine shaft extending from the output end of the motor set module; the clutch control module is used for controlling the engagement or disengagement of the driving ring and the clutch ring.

Further, the clutch control module specifically comprises a reset device, a clutch control ring and a clutch control switch; the clutch control ring and the reset device are provided between the driving ring and the clutch ring, and the clutch control switch is connected with the clutch control ring; the clutch control switch is able to drive the extension or contraction of the reset device by controlling the left and right rotation of the clutch control ring, so as to engage the driving ring and the clutch ring or disengage the driving ring from the clutch ring.

Further, one side of the driving ring engaged with the clutch ring is provided with dentate protrusions, and one side of the clutch ring engaged with the driving ring is provided with dentate protrusions matching with the dentate protrusions of the driving ring, and the dentate protrusions of the two are matched and engaged with each other in a case where the driving ring is engaged with the clutch ring.

Further, an electric machine cover and a clutch ring adapter ring are further comprised; the clutch ring adapter ring is provided inside the electric machine cover, and the clutch ring adapter ring is adapted to and connected with the clutch ring; the clutch control switch is provided above the electric machine cover, and can control the clutch ring adapter ring by means of the electric machine cover, so as to control the left and right rotation of the clutch control ring.

Further, the clutch control switch specifically is a clutch control knob.

Further, a scraper seal and a lock nut are further comprised; the clutch control knob is fixed and provided on the electric machine cover by means of the lock nut, and the scraper seal is provided between the clutch control knob and the lock nut.

Further, the clutch control module specifically comprises a reset device and a clutch control switch; the reset device is provided at one side of the clutch ring, and the clutch control switch is connected with the clutch ring; the clutch control switch is able to drive the clutch ring to be disengaged from the driving ring by pulling outward; the clutch ring is able to be engaged with the driving ring by means of the reset device.

Further, the clutch control switch specifically comprises a screw cap and a pull rod, the screw cap is provided at one end of the pull rod, and the other end of the pull rod is connected with the clutch ring; the screw cap is further provided with a positioning shaft and a positioning slot, and when the clutch control switch is pulled outward and drives the clutch ring to be disengaged from the driving ring, the clutch control switch is able to be fixed at a position by rotating the screw cap at a certain angle and clamping the positioning shaft into the positioning slot.

Further, the clutch control switch further comprises a fixing bolt, a bolt hole is provided on the pull rod, and the bolt hole is provided at one end connected with the clutch ring, and the fixing bolt is able to pass through the bolt hole, so that the clutch ring is fixed and linked with the pull rod.

The present invention further discloses a control method of an electric machine device, which comprises the following steps: a clutch control module controls the engagement of a driving ring and a clutch ring; the motor set module is powered on and drives the clutch ring by means of the driving ring, so as to drive the whole electric machine to rotate; the clutch control module controls the disengagement of the driving ring and the clutch ring; the clutch ring is disengaged from the driving ring when rotating, so as to isolate the resistance inside the motor set module.

Further, the step of the clutch control module controlling the engagement of the driving ring and the clutch ring and the clutch control module controlling the disengagement of the driving ring and the clutch ring specifically is the clutch control switch controls the left and right rotation of the clutch control ring to drive a contraction of the reset device, so that the driving ring is engaged with the clutch ring; the clutch control switch controls the left and right rotation of the clutch control ring to drive an extension of the reset device, so that the driving ring is disengaged from the clutch ring.

Further, an electric machine cover and a clutch ring adapter ring is further comprised, and the clutch control switch specifically is a clutch control knob; and the step of the clutch control switch controlling the left and right rotation of the clutch control ring to drive the contraction of the reset device, so that the driving ring is engaged with the clutch ring, and the clutch control switch controlling the left and right rotation of the clutch control ring to drive the extension of the reset device, so that the driving ring is disengaged from the clutch ring specifically comprises: rotating the clutch control knob, and the clutch control knob controls the clutch ring adapter ring by means of the electric machine cover and controls the left and right rotation of the clutch control ring, so as to drive the contraction of the reset device to engage the driving ring and the clutch ring; rotating the clutch control knob, and the clutch control knob controls the clutch ring adapter ring by means of the electric machine cover and controls the left and right rotation of the clutch control ring, so as to drive the extension of the reset device to disengage the driving ring from the clutch ring.

Further, the step of the clutch control module controlling the engagement of the driving ring and the clutch ring and the clutch control module controlling the disengagement of the driving ring and the clutch ring specifically is: pulling the clutch control switch outward and driving the clutch ring to be disengaged from the driving ring, meanwhile making the reset device contract due to the acting force pulling outward; in a case where the acting force pulling the clutch control switch outward is cancelled, the reset device extends to an original position to drive the engagement of the clutch ring and the driving ring.

The electric machine device and the control method thereof according to the present invention can realize the cooperation and separation of electric machine assistance by adding another clutch system to the existing electric machine clutch system, it can realize the electric assistance of the electric machine to the bicycle when the electric machine is powered on, and when the electric machine is powered off, the bicycle wheels are not subjected to the resistance inside the electric machine device when the rider is riding naturally by a method of controlling the complete disengagement of the driving ring and the clutch ring inside the electric machine device, so as to make the riding easier and more labor-saving.

### Brief Description of the Drawings

FIG. 1 is a first structural schematic diagram of the electric machine device of the present invention;
FIG. 2 is a second structural schematic diagram of the electric machine device of the present invention;
FIG. 3 is a structural schematic diagram of the driving ring and the clutch ring of the present invention;
FIG. 4 is a first schematic flowchart of the control method of the electric machine device of the present invention;
FIG. 5 is a second schematic flowchart of the control method of the electric machine device of the present invention;
FIG. 6 is a first structural schematic diagram of the third embodiment of the present invention;
FIG. 7 is a second structural schematic diagram of the third embodiment of the present invention;
FIG. 8 is a third structural schematic diagram of the third embodiment of the present invention;
FIG. 9 is a fourth structural schematic diagram of the third embodiment of the present invention.

### Detailed Embodiments

The structure and working principle of the present invention will be further explained with reference to the accompanying drawings hereinafter.

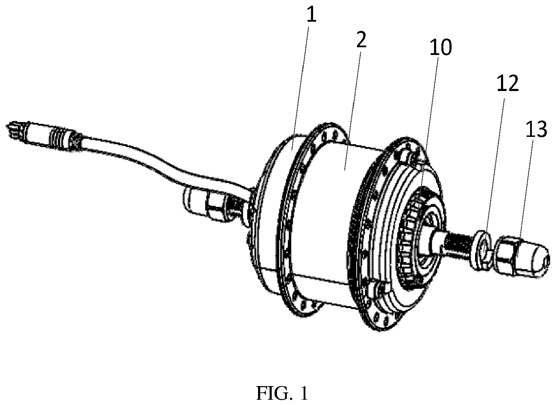

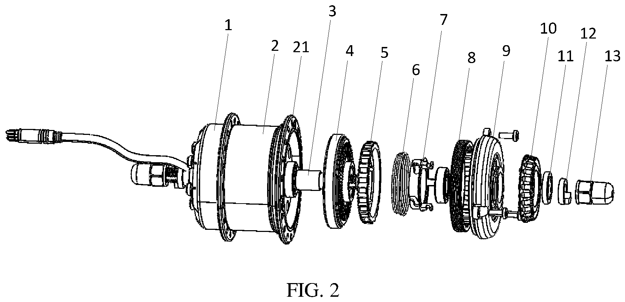

As shown in FIG. 1 and FIG. 2, FIG. 1 is a first structural schematic diagram of the electric machine device of the present invention; FIG. 2 is a second structural schematic diagram of the electric machine device of the present invention. An electric machine device 1 according to the present invention includes an electric machine shaft 3 and an electric machine housing 2 provided on the electric machine shaft, a motor set module 21 is provided inside the electric machine housing 2. In a preferred embodiment of the present invention, the electric machine device 1 can be installed on the front wheels and the rear wheels, and the electric machine shaft penetrates through the electric machine housing 1.

A driving ring 4, a clutch ring 5 and a clutch control module are provided at one side of an output end of the motor set module 21. Preferably, the driving ring 4, the clutch ring 5 and the clutch control module are specifically provided on one end of the electric machine shaft 3 extending from the output end of the motor set module 21. The clutch control module is use for controlling the engagement or disengagement of the driving ring 4 and the clutch ring 5. In the preferred embodiment of the present invention, the clutch control module specifically comprises a reset device 6, a clutch control ring 7 and a clutch control switch 10. The clutch control ring 7 and the reset device 6 are provided between the driving ring 4 and the clutch ring 5, and the clutch control switch 10 is connected with the clutch control ring 7. The clutch control switch 10 is able to drive the extension or contraction of the reset device 6 by controlling the left and right rotation of the clutch control ring 7, so as to engage the driving ring 4 and the clutch ring 5 or disengage the driving ring 4 from the clutch ring 5. Generally, bearings are further comprised, the bearings are provided at the connections of the electric machine shaft 3 with the driving ring 4 and the clutch control ring 7.

In another preferred embodiment of the present invention, the electric machine device further comprises an electric machine cover 9, a clutch ring adapter ring 8, a scraper seal 11 and a lock nut 13. The clutch ring adapter ring 8 is provided inside the electric machine cover 9, and the clutch ring adapter ring 8 is adapted to and connected with the clutch ring 5. The clutch control switch 10 is provided on the electric machine cover 9, and is able to control the clutch ring adapter ring 8 by means of the electric machine cover 9, so as to control the left and right rotation of the clutch control ring 7. The electric machine cover 9 is connected with the electric machine housing 2 by means of a plurality of electric machine cover lock bolts, and the clutch control switch 10 is fixed and provided on the electric machine cover 9 by means of the lock nut, and the scraper seal 11 is provided between the clutch control switch 10 and the lock nut 13. Generally, a lock gasket 12 is provided under the lock nut 13.

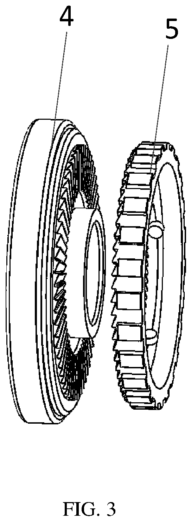

As shown in FIG. 3, FIG. 3 is a structural schematic diagram of the driving ring 4 and the clutch ring 5 of the present invention. In a preferred embodiment of the present invention, one side of the driving ring 4 engaged with the clutch ring 5 is provided with dentate protrusions, and one side of the clutch ring 5 engaged with the driving ring 4 is provided with dentate protrusions matching with the dentate protrusions of the driving ring 4, and the dentate protrusions of the two are matched and engaged with each other when the driving ring is engaged with the clutch ring.

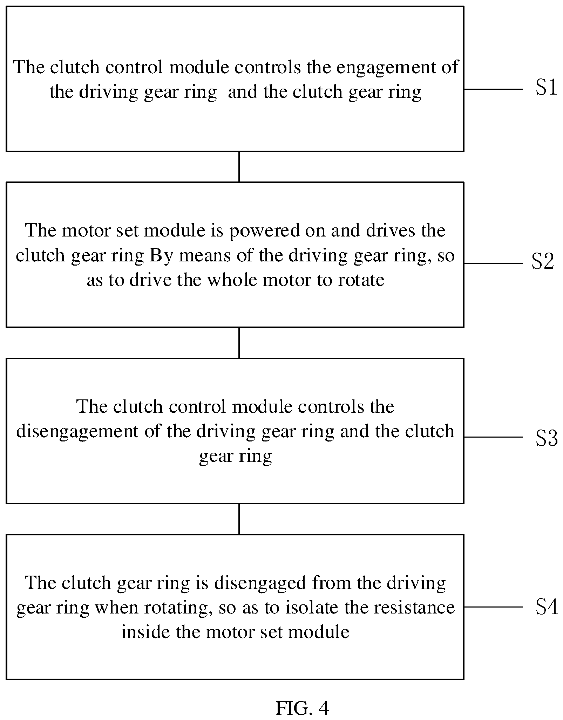

As shown in FIG. 4, FIG. 4 is a first schematic flowchart of the control method of the electric machine device of the present invention, the present invention further discloses the control method of the electric machine device, and the method specifically comprises the following steps:
S1. The clutch control module controls the engagement of the driving ring and the clutch ring.
S2. The motor set module is powered on and drives the clutch ring by means of the driving ring, so as to drive the whole electric machine to rotate.
S3. The clutch control module controls the disengagement of the driving ring and the clutch ring.
S4. The clutch ring is disengaged from the driving ring when rotating, so as to isolate the resistance inside the motor set module.

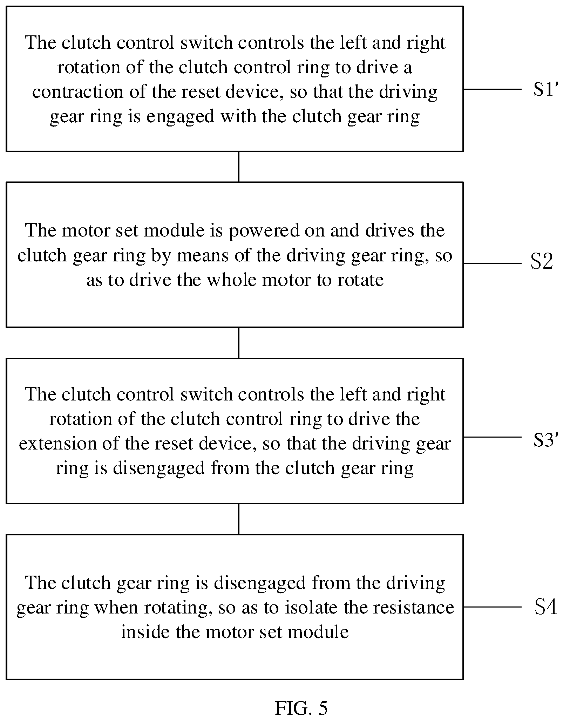

As shown in FIG. 5, FIG. 5 is a second schematic flowchart of the control method of the electric machine device of the present invention, and the method specifically comprises the following steps:
S1'. The clutch control switch controls the left and right rotation of the clutch control ring to drive the contraction of the reset device, so that the driving ring is engaged with the clutch ring.
S2. The motor set module is powered on and drives the clutch ring by means of the driving ring, so as to drive the whole electric machine to rotate.
S3'. The clutch control switch controls the left and right rotation of the clutch control ring to drive the extension of the reset device, so that the driving ring is disengaged from the clutch ring.
S4. The clutch ring is disengaged from the driving ring when rotating, so as to isolate the resistance inside the motor set module.

In the first embodiment of the present invention, the specific structure of the electric machine device comprises an electric machine shaft and an electric machine housing provided on the electric machine shaft, the motor set module is provided inside the electric machine housing, and the electric machine device is installed on the front wheel of a bicycle, and the electric machine shaft penetrates through the electric machine housing. A driving ring, a clutch ring and a clutch control module are provided at one end of the electric machine shaft extending from the output end of the motor set module, and the clutch control module specifically comprises a reset device, a clutch control ring and a clutch control switch, the clutch control switch specifically is a clutch control knob, and the reset device specifically is a reset spring.

The electric machine device further comprises an electric machine cover, a clutch ring adapter ring, a scraper seal and a lock nut. The clutch ring adapter ring is provided inside the electric machine cover, and the clutch ring adapter ring is adapted to and connected with the clutch ring. The clutch control knob is provided on the electric machine cover, and a user can manually rotate the clutch control knob, so as to control the clutch ring adapter ring by means of the electric machine cover, and thereby controlling the left and right rotation of the clutch control ring. The electric machine cover is connected with the electric machine housing by means of a plurality of electric machine cover lock bolts, and the clutch control knob is fixed and provided on the electric machine cover by means of the lock nut, and the scraper seal is provided between the clutch control switch and the lock nut, and a lock gasket is further provided under the lock nut.

The control method of the electric machine device of the first embodiment of the present invention specifically comprises the following steps:
Rotating the clutch control knob;
The clutch control knob controls the clutch ring adapter ring by means of the electric machine cover and controls the left and right rotation of the clutch control ring, so as to drive the contraction of the reset device to engage the driving ring with the clutch ring;
The motor set module is powered on and drives the clutch ring by means of the driving ring, so as to drive the whole electric machine to rotate;
Rotating the clutch control knob;

The clutch control knob controls the clutch ring adapter ring by means of the electric machine cover and controls the left and right rotation of the clutch control ring, so as to drive the extension of the reset device to disengage the driving ring from the clutch ring.

The clutch ring is disengaged from the driving ring when rotating, so as to isolate the resistance inside the motor set module. Specifically, a gear set is provided inside the motor set module, and the gear set is connected with the electric machine shaft. After the clutch ring is disengaged from the driving ring, the movement of wheels will not continue to drive the driving ring to rotate while driving the clutch ring to rotate when a user of a bicycle rides, so that the user will not be further subjected to the resistance of the gear set inside the motor set module, which makes riding more laborious.

In the second embodiment of the present invention, the specific structure of the electric machine device includes an electric machine shaft and an electric machine housing provided on the electric machine shaft, the motor set module is provided inside the electric machine housing, and the electric machine device is installed on the front wheel of the bicycle, and the electric machine shaft is designed not to penetrate through the electric machine housing. A driving ring, a clutch ring and a clutch control module are provided on one end of the electric machine shaft extending from the output end of the motor set module, and the clutch control module specifically comprises a reset device, a clutch control ring and a clutch control switch, the reset device specifically is a reset spring; the electric machine device further comprises an electric machine cover, a clutch ring adapter ring, a scraper seal and a lock nut. The clutch ring adapter ring is provided inside the electric machine cover, and the clutch ring adapter ring is adapted to and connected with the clutch ring.

The clutch control switch specifically is an electric clutch control switch, and further comprises a control module; the control module is electrically connected with the electric clutch control switch and the clutch ring adapter ring. By pressing the electric clutch control switch, the control module can be driven to control the clutch ring adapter ring, so as to control the left and right rotation of the clutch control ring. The electric machine cover is connected with the electric machine housing by means of a plurality of electric machine cover lock bolts, and the clutch control knob is fixed and provided on the electric machine cover by means of the lock nut, and the scraper seal is provided between the clutch control switch and the lock nut, and the lock gasket is further provided under the lock nut.

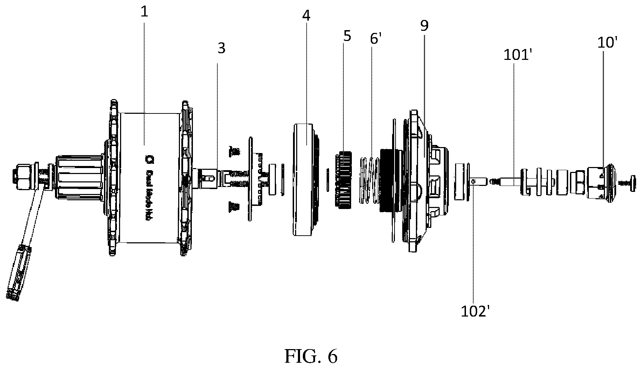

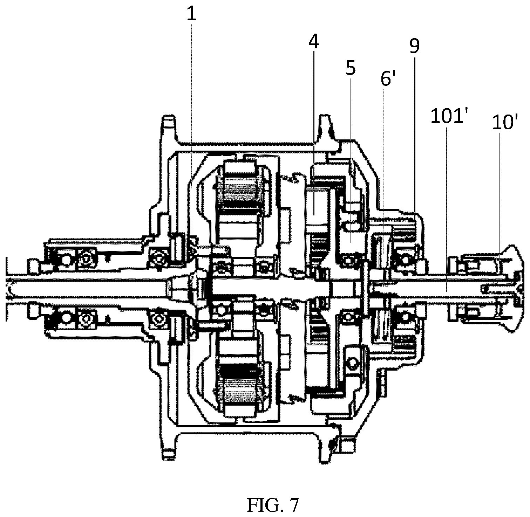

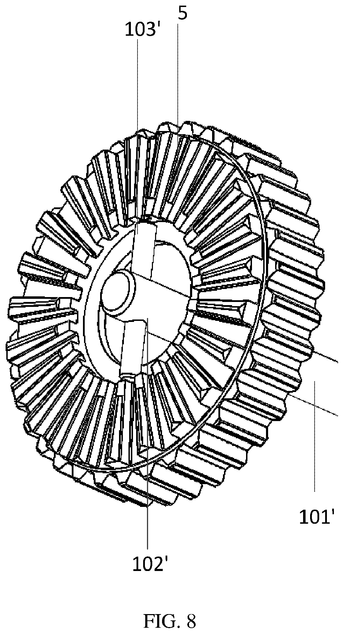

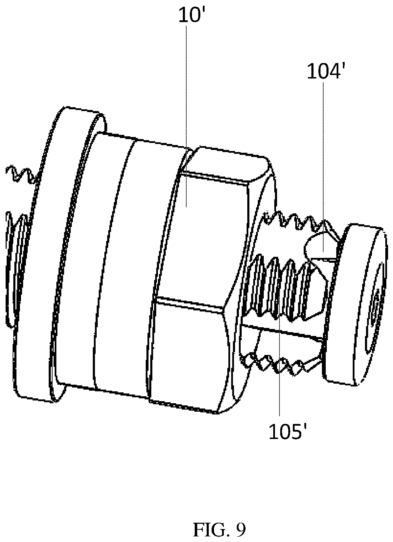

As shown in FIG. 6, FIG. 7, FIG. 8 and FIG. 9, FIG. 6 is a first structural schematic diagram of the third embodiment of the present invention; FIG. 7 is a second structural schematic diagram of the third embodiment of the present invention; FIG. 8 is a third structural schematic diagram of the third embodiment of the present invention; and FIG. 9 is a fourth structural schematic diagram of the third embodiment of the present invention. In the third embodiment of the present invention, the electric machine device 1 specifically comprises an electric machine shaft 3 and an electric machine housing provided on the electric machine shaft, a motor set module is provided inside the electric machine housing, and a driving ring 4, a clutch ring 5 and a clutch control module are provided at one side of the output end of the motor set module; the clutch control module specifically comprises a reset device 6' and a clutch control switch.

The reset device specifically is a spring 6', which is provided at one side of the clutch ring between the clutch ring 5 and the electric machine cover 9
As shown in FIG. 9, the clutch control switch specifically comprises a screw cap 10', a pull rod 101' and a fixing bolt 103', the screw cap 10' is provided at one end of the pull rod 101', and the other end of the pull rod 101' is fixed and connected with the clutch ring 5; the screw cap 10' is further provided with a positioning shaft and a positioning slot, the pull rod is provided with a bolt hole 102', and the bolt hole 102' is provided at one end connected with the clutch ring 5, and the fixing bolt is able to pass through the bolt hole 102', so that the clutch ring 5 is fixed and linked with the pull rod 101'; the length of the fixing bolt 103' is larger than the diameter of the inner hole of the clutch ring 5, so that the clutch ring 5 can be clamped on the pull rod 101' after the fixing bolt 103' is inserted into the bolt hole 102'.

When the user holds the screw cap 10' and pulls the whole clutch control switch outward, the pull rod 101' is able to drive the clutch ring 5 to disengage from the driving ring 4, meanwhile, the spring 6' provided between the clutch ring 5 and the electric machine cover 9 can be driven to contract due to the acting force pulling outward. At this time, when the user wants to fix the clutch control switch in the pull-out position, that is, the positioning shaft 105' is clamped into the positioning slot 104' by rotating the screw cap 10' at a certain angle, so that the clutch control switch is fixed at the pull-out position.

When the user wants to restore the engagement of the clutch ring 5 and the driving ring 4, that is, first the screw cap 10' is rotated at a certain angle again so that the positioning shaft 105' is disengaged from the positioning slot 104'. At this time, due to the resilience force of the spring 6', when the user slightly releases the clutch control switch, the spring 6' can drive the clutch ring 5 back to its original position under the resilience force.

In addition, the position of the spring 6' can also be provided between the clutch ring 5 and the driving ring 4. Under this structure, when the user holds the screw cap 10' and pulls the whole clutch control switch outward, the spring 6' provided between the clutch ring 5 and the electric machine housing can also be driven to extend, and when the user wants to restore the engagement of the clutch ring 5 and the driving ring 4, the clutch control switch can be slightly released. The spring 6' which is in an extended state is able to pull the clutch ring 5 back to its original position under the retracting force, so as to achieve the purpose of engaging the clutch ring 5 with the driving ring 4 again.

The above is only a schematic description of the present invention, and those skilled in the art should know that various improvements can be made to the present invention without departing from the working principle of the present invention, which all belong to the protection scope of the present invention.

## Claims

1. An electric machine device **characterized in that** comprises an electric machine shaft and an electric machine housing provided on the electric machine shaft, a motor set module is provided inside the electric machine housing, and a driving ring, a clutch ring and a clutch control module are provided at one side of an output end of the motor set module;
the clutch control module is used for controlling the engagement or disengagement of the driving ring and the clutch ring.

2. The electric machine device according to claim 1, **characterized in that** the clutch control module specifically comprises a reset device, a clutch control ring and a clutch control switch; the clutch control ring and the reset device are provided between the driving ring and the clutch ring, and the clutch control switch is connected with the clutch control ring; the clutch control switch is able to drive the extension or contraction of the reset device by controlling the left and right rotation of the clutch control ring, so as to engage the driving ring and the clutch ring or disengage the driving ring from the clutch ring.

3. The electric machine device according to claim 1, **characterized in that** one side of the driving ring engaged with the clutch ring is provided with dentate protrusions, and one side of the clutch ring engaged with the driving ring is provided with dentate protrusions matching with the dentate protrusions of the driving ring, and the dentate protrusions of the two are matched and engaged with each other when the driving ring is engaged with the clutch ring.

4. The electric machine device according to claim 2, **characterized by** further comprising an electric machine cover and a clutch ring adapter ring; the clutch ring adapter ring is provided inside the electric machine cover, and the clutch ring adapter ring is adapted to and connected with the clutch ring; the clutch control switch is provided above the electric machine cover, and can control the clutch ring adapter ring by means of the electric machine cover, so as to control the left and right rotation of the clutch control ring.

5. The electric machine device according to claim 4, **characterized in that** the clutch control switch specifically is a clutch control knob.

6. The electric machine device according to claim 5, **characterized by** further comprising a scraper seal, and a lock nut; the clutch control knob is fixed and provided on the electric machine cover by means of the lock nut, and the scraper seal is provided between the clutch control knob and the lock nut.

7. The electric machine device according to claim 1, **characterized in that** the clutch control module specifically comprises a reset device and a clutch control switch; the reset device is provided at one side of the clutch ring, and the clutch control switch is connected with the clutch ring; the clutch control switch is able to drive the clutch ring to be disengaged from the driving ring by pulling outward; the clutch ring is able to be engaged with the driving ring by means of the reset device.

8. The electric machine device according to claim 7, **characterized in that** the clutch control switch specifically comprises a screw cap and a pull rod, the screw cap is provided at one end of the pull rod, and the other end of the pull rod is connected with the clutch ring; the screw cap is further provided with a positioning shaft and a positioning slot, and when the clutch control switch is pulled outward and drives the clutch ring to be disengaged from the driving ring, the clutch control switch is able to be fixed at a position by rotating the screw cap at a certain angle and clamping the positioning shaft into the positioning slot.

9. The electric machine device according to claim 8, **characterized in that** the clutch control switch further comprises a fixing bolt, a bolt hole is provided on the pull rod, and the bolt hole is provided at one end connected with the clutch ring, and the fixing bolt is able to pass through the bolt hole, so that the clutch ring is fixed and linked with the pull rod.

10. A control method of an electric machine device, **characterized in that** the method comprises the following steps of:
a clutch control module controlling the engagement of a driving ring and a clutch ring;
a motor set module being powered on and driving the clutch ring by means of the driving ring, so as to drive the whole electric machine to rotate;
the clutch control module controlling the disengagement of the driving ring and the clutch ring;
the clutch ring being disengaged from the driving ring when rotating, so as to isolate the resistance inside the motor set module.

11. The control method of the electric machine device according to claim 10, **characterized in that** the step of the clutch control module controlling the engagement of the driving ring and the clutch ring and the clutch control module controlling the disengagement of the driving ring and the clutch ring specifically is:
the clutch control switch controlling the left and right rotation of the clutch control ring to drive a contraction of the reset device, so that the driving ring is engaged with the clutch ring;
the clutch control switch controlling the left and right rotation of the clutch control ring to drive an extension of the reset device, so that the driving ring is disengaged from the clutch ring.

12. The control method of the electric machine device according to claim 11, **characterized by** further comprising an electric machine cover and a clutch ring adapter ring, and the clutch control switch specifically is a clutch control knob, and the step of the clutch control switch controlling the left and right rotation of the clutch control ring to drive the contraction of the reset device, so that the driving ring is engaged with the clutch ring, and the clutch control switch controlling the left and right rotation of the clutch control ring to drive the extension of the reset device, so that the driving ring is disengaged from the clutch ring specifically comprises:
rotating the clutch control knob, and the clutch control knob controlling the clutch ring adapter ring by means of the electric machine cover and controlling the left and right rotation of the clutch control ring, so as to drive the contraction of the reset device to engage the driving ring and the clutch ring;
rotating the clutch control knob, and the clutch control knob controlling the clutch ring adapter ring by means of the electric machine cover and controlling the left and right rotation of the clutch control ring, so as to drive the extension of the reset device to disengage the driving ring from the clutch ring.

13. The control method of the electric machine device according to claim 10, **characterized in that** the step of the clutch control module controlling the engagement of the driving ring and the clutch ring and the clutch control module controlling the disengagement of the driving ring and the clutch ring specifically is:
pulling the clutch control switch outward and driving the clutch ring to be disengaged from the driving ring, meanwhile making the reset device contract due to the acting force pulling outward;
in a case where the acting force pulling the clutch control switch outward is cancelled, the reset device extending to an original position to drive the engagement of the clutch ring and the driving ring.
